# EUROPÄISCHE PATENTSCHRIFT

(11) **EP 0 861 380 B1**
(45) Veröffentlichungstag und Bekanntmachung des Hinweises auf die Patenterteilung: **15.03.2000**
(21) Anmeldenummer: 97944799.2
(22) Anmeldetag: 27.08.1997
(51) Int. Cl.: F16B 37/04

(54) **KUNSTSTOFFMUTTER ZUM VERBINDEN VON PLATTENARTIGEN TEILEN**
PLASTIC NUT FOR JOINING PLATE-LIKE PARTS
ECROU EN MATIERE PLASTIQUE POUR L'ASSEMBLAGE D'ELEMENTS DU TYPE PLAQUE

(30) Priorität: 25.09.1996 DE 19639396; 07.07.1997 DE 19728988
(43) Veröffentlichungstag der Anmeldung: 02.09.1998
(60) Teilanmeldung: 99116734.7
(73) Patentinhaber: EJOT VERBINDUNGSTECHNIK GmbH & Co. KG, D-57334 Bad Laasphe (DE)
(72) Erfinder: KÖNIG, Gottfried, D-57334 Bad Laapshe (DE); WEITZEL, Stephan, D-57334 Bad Laapshe (DE)
(74) Vertreter: Bardehle, Heinz, Dipl.-Ing.
(86) Internationale Anmeldenummer: EP9704667
(87) Internationale Veröffentlichungsnummer: WO9813607

(56) Entgegenhaltungen:
- WO-A-87/01419
- DE-A- 2 928 619
- US-A- 3 534 797
- US-A- 3 701 302

## Beschreibung

Die Erfindung bezieht sich auf eine Kunststoffmutter zum Einsetzen in ein Durchgangsloch eines plattenartigen Bauteils die aus Halteteilen besteht, von denen eines als an das Bauteil von der Montageseite andrückbarer Flansch und ein anderes als von der gegenüberliegenden Seite andrückbare Schnapphaken zum Einrasten hinter das Bauteil ausgebildet sind, wobei die Halteteile mit einem eine Aufnahmebohrung für eine Schraube aufweisenden Mutterteil versehen sind, der Flansch Bestandteil eines das Mutterteil umfassenden Flanschteils ist und das Mutterteil in Richtung Flansch drückbar ist.

Eine derartige Mutter ist in der DE-OS 29 28 619 offenbart. Die bekannte Mutter ist einstückig aus Kunststoff geformt und besteht im wesentlichen aus einem mit einer Aufnahmebohrung für eine Schraube versehenen Mutterteil, das mit zwei seitlich zu ihm angeordneten Flanschhälften über Filmscharniere verbunden ist. Die Verbindung des Mutterteils mit den beiden Flanschhälften über jeweils ein Filmscharnier ermöglicht es, das gesamte Bauelement mit seitlich weggestreckten Flanschhälften in einer Form zu spritzen, wonach durch Andrücken der beiden Flanschhälften an das Mutterteil, ermöglicht durch die Elastizität der Filmscharniere, die fertige Kunststoffmutter entsteht, bei der das Mutterteil mit den beiden Flanschhälften axial unverschiebbar verbunden ist. Aus dem Mutterteil ragen seitlich Schnapphaken mit an ihnen angebrachten Einführschrägen heraus, die sich beim Einführen der Kunststoffmutter in das Durchgangsloch eines plattenartigen Bauteils zusammendrücken und bei Anliegen der Flanschhälften an das Bauteil zurückfedern und dabei hinter das Bauteil einrasten. Aufgrund des gegebenen Abstandes zwischen dem Schnapphaken und den Flanschhälften kann die bekannte Kunststoffmutter in Durchgangslöcher von plattenartigen Bauteilen eingesteckt werden, die eine unterschiedliche, diesen Abstand nicht übersteigende Dicke besitzen. Bei seinem Einstecken in ein Durchgangsloch wird die Kunststoffmutter allerdings wegen des möglichen Spiels des plattenartigen Bauteils zwischen den Flanschhälften und dem Schnapphaken nur lose gehalten, was bei vormontierten Bauelementen, vor allem beim Transport und einer späteren Verwendung unerwünscht ist. Bei der bekannten Kunststoffmutter wird die feste Verbindung mit einem plattenartigen Bauteil dadurch herbeigeführt, daß eine in das Mutterteil eingedrehte Schraube das Mutterteil mit seinen Schnapphaken in Richtung Flanschhälften zieht, wodurch die Filmscharniere abreißen und das Mutterteil unter der Wirkung der Einschraubbewegung mit seinen Schnapphaken an das plattenartige Bauteil angedrückt wird. Bei einem Lösen der Schraube lockert sich dann zwangsläufig die Kunststoffmutter gegenüber dem plattenartigen Bauteil.

Der Erfindung liegt die Aufgabe zugrunde, eine Kunststoffmutter der eingangs genannten Art zu schaffen, die eine Anbringung an plattenartigen Bauteilen mit unterschiedlichen Dicken in einer Weise ermöglicht, daß sich die Kunststoffmutter selbsttätig an die jeweils gegebene Dicke des Bauteils in rüttelfreier Verbindung anpaßt.

Diese Aufgabe wird dadurch gelöst, daß das Mutterteil gegenüber dem Flanschteil axial beweglich durch eine eine Federzone bildende elastische Stützanordnung in Richtung Flanschteil gedrückt wird, wobei die Federzone unter Ausgleich unterschiedlicher Dicken des Bauteils das Mutterteil und das Flanschteil nach Einsetzen der Kunststoffmutter in Anlage an das Bauteil bringt.

Aufgrund der zwischen Mutterteil und Flanschhälften wirkenden Federzone ergibt sich eine elastische Stützanordnung, durch die das Mutterteil selbsttätig in Richtung Flansch gedrückt wird, so daß sich die Kunststoffmutter unter der von der Federzone gegebenen Federspannung mit ihrem Flansch und mit ihren Schnapphaken an dem Bauteil rüttelsicher festhält, womit eine nichtwackelnde und damit nichtklappernde Verbindung zwischen Kunststoffmutter und Bauteil vorliegt. Die Federzone ermöglicht somit unter Ausgleich unterschiedlicher Dicken des die Kunststoffmutter aufnehmenden Bauteils, daß nach Einsetzen der Kunststoffmutter, Mutterteil und Flanschteil an dem Bauteil unabhängig vom Anziehen einer Schraube anliegen, womit schon mit dem Einsetzen der Kunststoffmutter eine rüttelfreie Verbindung zwischen Bauteil und Kunststoffmutter gegeben ist.

Um beim Eindrehen und Anziehen einer Schraube in das Mutterteil zu verhindern, das sich das Mutterteil gegenüber dem Flanschteil verdrehen kann, gibt man dem Flanschteil für das Mutterteil eine Führung, durch die das Flanschteil das Mutterteil verdrehungssicher hält.

Zweckmäßig wird das Mutterteil durch eine eine Federzone bildende elastische Stützanordnung in Richtung Flansch gedrückt. Die Kunststoffmutter hält sich dann selbst an dem betreffenden Bauteil fest, so daß bei Verformung der elastischen Stützanordnung im Bereich ihrer Federzone die Kunststoffmutter rüttelsicher an dem Bauteil angebracht ist und eine nichtwackelnde und damit nicht klappernde Verbindung zwischen Kunststoffmutter und Bauteil vorliegt. Dabei ist es natürlich auch möglich, daß die Kunststoffmutter bei Einsetzen in ein besonders dünnes Bauteil nur lose an dem Bauteil anliegt, wobei sich jedoch die endgültige Befestigung an dem Bauteil dadurch ergibt, daß mit dem Anziehen einer Schraube zur Befestigung einer weiteren Baugruppe an dem plattenartigen Bauteil auch die Kunststoffmutter an dem Bauteil befestigt wird.

Die Federzone ermöglicht es unter Ausgleich unterschiedlicher Dicken des die Kunststoffmutter aufnehmenden Bauteils, daß Mutterteil und Flanschteil nach Einsetzen der Kunststoffmutter an dem Bauteil anliegen, womit eine rüttelfreie Verbindung zwischen Bauteil und Kunststoffmutter gegegeben ist.

Zweckmäßig bildet man den Flansch als Platte aus, wobei dann das Mutterteil mit den Schnapphaken versehen ist. Beim Einsetzen der Kunststoffmutter in ein Bauteil kommt dann der als Platte ausgebildete Flansch zur Anlage an das Bauteil, während auf der gegenüberliegenden Seite die Schnapphaken des Mutterteils hinter das Bauteil einrasten und damit die Kunststoffmutter mit dem Bauteil verbinden.

Eine andere Möglichkeit der Gestaltung der Kunststoffmutter besteht darin, den Flansch in Segmente aufzuteilen, die jeweils mit einem Schnapphaken versehen sind. In diesem Falle verrastet sich die Kunststoffmutter über die mit dem Flansch verbundenen Schnapphaken mit dem Bauteil, wobei das Mutterteil das Widerlager gegenüber dem Schnapphaken bildet.

Wenn das Mutterteil mit den Schnapphaken versehen ist, eignet sich die Kunststoffmutter insbesondere dazu, mit dem Mutterteil vorweg in das Durchgangsloch des Bauteils eingesetzt zu werden. Ist dagegen der Flansch mit den Schnapphaken versehen, so ergibt sich die Möglichkeit, das Mutterteil mit dem Flansch vorweg in das Durchgangsloch im Bauteil einzusetzen. Es ist darüber hinaus auch möglich, neben dem mit den Schnapphaken versehenen Flansch auch das Mutterteil mit Schnapphaken zu versehen, was dazu führt, daß eine derartige Kunststoffmutter sowohl von der einen als von der anderen Seite eines Bauteiles in dessen Durchgangsloch eingesetzt werden kann.

Um dem Mutterteil in dem Flanschteil eine sichere Führung zu geben, gestaltet man das Flanschteil zweckmäßig derart, daß dieses das Mutterteil hülsenartig umgibt.

Um eine Überbeanspruchung der Bandanordnung zu vermeiden, versieht man das Flanschteil und das Mutterteil zweckmäßig mit Anschlägen für die Begrenzung der Axialbeweglichkeit von Mutterteil gegenüber dem Flanschteil.

Eine günstige Fertigung von Mutterteil und Flanschteil läßt sich dadurch erzielen, daß Mutterteil und Flanschteil über die die elastische Bandanordnung bildenden Kunststoffbänder einstückig miteinander verbunden sind.

Der Zusammenhalt zwischen Mutterteil und Flanschteil läßt sich auch durch eine Verrasterung herbeiführen, die bei einem Einschieben des Mutterteils in das Flanschteil wirksam wird.

Bei entsprechender Gestaltung enthält die Verrasterung zweckmäßigerweise die elastischen Bänder.

Damit beim Eindrehen einer Schraube in das Mutterteil sich das Flanschteil nicht mitdrehen kann, versieht man den Flansch auf seiner dem Mutterteil zugewandten Seite zweckmäßig mit einer in die Durchgangslöcher passenden Verdrehsicherung.

Die Kunststoffmutter läßt sich auch so gestalten, daß mit ihr eine Abdichtung des Durchgangslochs erfolgt. Dies geschieht dadurch, daß der Flansch mit einer Dichtzone versehen wird.

Um die Kunststoffmutter hinsichtlich der Aufnahme einer Schraube günstig zu gestalten, gestaltet man zweckmäßig die Aufnahmebohrung des Mutterteils so, daß die Aufnahmebohrung auf der dem Flansch zugewandten Seite ein Durchgangsloch bildet und einen daran anschließenden engeren Bereich aufweist. Die Aufnahmebohrung gestattet es dann, zunächst über ihre das Durchgangsloch bildende Länge die Schraube aufzunehmen, die somit für den nachfolgenden Eindrehvorgang geführt ist. Der an das Durchgangsloch sich anschließende engere Bereich ist dann für die Aufnahme des Gewindes der Schraube vorgesehen. Hierzu kann der engere Bereich einen solchen Durchmesser besitzen, daß er das Eindrehen einer selbstfurchenden Schraube ermöglicht. Man kann aber den engeren Bereich auch mit einem Gewinde versehen, das zu dem Gewinde einer einzudrehenden Schraube paßt. Um dabei das Eindrehen einer Schraube zu erleichtern, versieht man die Aufnahmebohrung an ihrem Übergang zu ihrem engeren Bereich zweckmäßig mit einer gewindeartigen Schräge mit ein oder mehreren Stufen, in die sich die Schraube leicht eindrehen läßt.

Um die Möglichkeit des Ausgleichs verschiedener Dicken des Bauteils zu erweitern, kann man den Flansch auf seiner dem Bauteil zugewandten Seite mit Rastnasen versehen, die hinter die dem Flansch abgewandten Seite des Bauteils einrastbar sind. In diesem Falle kann man die Federzone der elastischen Bänder im wesentlichen auf besonders dicke Bauteile beziehen und für den Fall der Anbringung der Kunststoffmutter an einem besonders dünnen Bauteil dieses mittels der Rastnasen an der Kunststoffmutter festhalten.

Die Kunststoffmutter kann man auch so gestalten, daß sich mit ihr relativ große Toleranzen bezüglich der Lage der von ihr aufgenommenen Schraube zu dem Flanschteil und damit zu dem Durchgangsloch in dem plattenartigen Bauteil ausgleichen lassen. Dies geschieht dadurch, daß dem Mutterteil gegenüber dem Flanschteil ein eine radiale gegenseitige Verschiebung ermöglichendes Spiel gegeben wird. Das Flanschteil führt also das Mutterteil mit diesem Spiel, so daß eine in das Mutterteil einzudrehende Schraube ihre Lage gegenüber dem Bauteil innerhalb dieses Spiels selbst wählen kann.

Weiterhin ist es möglich, die Schnapphaken in einer besonderen Weise wirksam zu machen. Man kann die Schnapphaken nämlich derart federnd mit dem Mutterteil verbinden, daß sie das Durchgangsloch beim Einsetzen im wesentlichen frei passieren und zum Einrasten durch Eindrehen einer Schraube auswärts drückbar sind. Hierdurch wird erreicht, daß das Einsetzen der Kunststoffmutter in ein Durchgangsloch eines plattenartigen Bauteils erleichtert wird, was insbesondere bei aus empfindlichen Materialien bestehenden Bauteilen wesentlich ist. Die Schnapphaken können nämlich bei der vorgesehenen Gestaltung das Durchgangsloch praktisch berührungslos passieren, so daß sie das Material des plattenartigen Bauteils nicht beeinträchtigen können. Zum Einrasten der Schnapphaken wird dann das Eindrehen einer Schraube verwendet, die, wenn sie in die Aufnahmebohrung des Mutterteils eingedreht wird, die Schnapphaken auswärts drückt, so daß sich diese an das Bauteil auf derjenigen Seite anlegen, die dem Flansch abgewandt ist. Auf diese Weise läßt sich durch den Druck der Schraube auf die Schnapphaken in Radialrichtung eine sichere Verbindung zwischen der Kunststoffmutter und dem Bauteil herbeiführen.

Eine weitere Ausgestaltung besteht darin, daß die Schnapphaken starr in das Mutterteil übergehen und das Mutterteil mit dem Flanschteil über eine elastische Stützanordnung verbunden ist, die das Mutterteil sowohl in Richtung Flanschteil drückt als auch das Mutterteil zusammen mit den Schnapphaken drehfedernd gegenüber dem Flanschteil hält. Aufgrund dieser Gestaltung der Kunststoffmutter läßt sich diese in ein Durchgangsloch einsetzen, in dem aufgrund einer in das Durchgangsloch passenden Verdrehsicherung an der Kunststoffmutter diese selbst verdrehsicher gehalten ist, wobei aufgrund der drehfedernden Halterung des Mutterteils gegenüber dem Flanschteil das Mutterteil in eine Lage verdreht werden kann, in der die mit ihm starr verbundenen Schnapphaken durch Aussparungen an dem Durchgangsloch hindurchgeführt werden können. Die Schnapphaken federn dann hinter dem Bauteil aufgrund ihrer drehfedernden Halterung zurück, wobei sie sich hinter das Bauteil setzen und gegen dieses drücken, womit die Kunststoffmutter mit dem Bauteil verbunden ist.

In den Figuren sind Ausführungsbeispiele der Erfindung dargestellt.

Es zeigen:
- **Figur 1a - d**: eine Kunststoffmutter in vier Ansichten, bei der die Schnapphaken Bestandteil des Flanschteiles sind;
- **Figur 2a - c**: das Flanschteil der Kunststoffmutter gemäß Figur 1 allein in drei Ansichten;
- **Figur 3a - c**: das Mutterteil der Kunststoffmutter gemäß Figur 1 allein in drei Ansichten;
- **Figuren 4a - d**: die Kunststoffmutter gemäß Figur 1, die zusätzlich eine wellenförmig geformte Stützanordnung aufweist.
- **Figur 5a - d**: eine Kunststoffmutter in vier Ansichten, bei der die Schnapphaken am Mutterteil angebracht sind mit elastischen Bändern als Stützanordnung;
- **Figuren 6a - c**: das Flanschteil der Kunststoffmutter gemäß Figur 5 allein in drei Ansichten;
- **Figuren 7a - c**: das Mutterteil der Kunststoffmutter gemäß Figur 5 allein in drei Ansichten;
- **Figur 8**: die Zusammenstellung einer an einem plattenartigen Bauteil angebrachten Kunststoffmutter gemäß Figur 5 mit einer daran angeschraubten Baugruppe;
- **Figur 9**: eine Kunststoffmutter, bei der Schnapphaken sowohl am Mutterteil als auch am Flanschteil vorgesehen sind;
- **Figur 10a und b**: eine Kunststoffmutter in zwei Ansichten, bei der Flanschteil und Mutterteil als zwei gesonderte Einzelteile ausgebildet sind;
- **Figur 11**: ein plattenartiges Bauteil mit einem eine besondere Verdrehsicherung ermöglichenden Durchgangsloch;
- **Figur 12**: die Ansicht einer Kunststoffmutter gemäß Figur 5d mit eine Verdrehsicherung bewirkenden Balken am Flanschteil;
- **Figur 13**: eine Abwandlung der Kunststoffmutter gemäß Figur 10a und b, bei der Flanschteil und Mutterteil aus getrennten Einzelteilen bestehen;
- **Figur 14**: eine mit einer Dichtung versehene Kunststoffmutter;
- **Figur 15**: eine der Kunststoffmutter gemäß Figur 5 ähnliche Kunststoffmutter mit einer Sicherung durch zusätzliche Rastnasen.
- **Figuren 16a - d**: eine Gestaltung mit durch Eindrehen einer Schraube auswärts drückbaren Schnapphaken in vier Ansichten,
- **Figuren 17a - d**: eine Ausführungsform mit drehfedernd gegenüber dem Flanschteil angebrachten Schnapphaken, die starr in das Mutterteil übergehen, ebenfalls in vier Ansichten,
- **Figuren 18a - c**: das Flanschteil der Kunststoffmutter gemäß Fig.17 allein in drei Ansichten,
- **Figuren 19a - c**: das Mutterteil der Kunststoffmutter gemäß Fig.17 allein in drei Ansichten,
- **Figur 20**: ein plattenartiges Bauteil mit Aussparungen für die Montage der Kunststoffmutter.

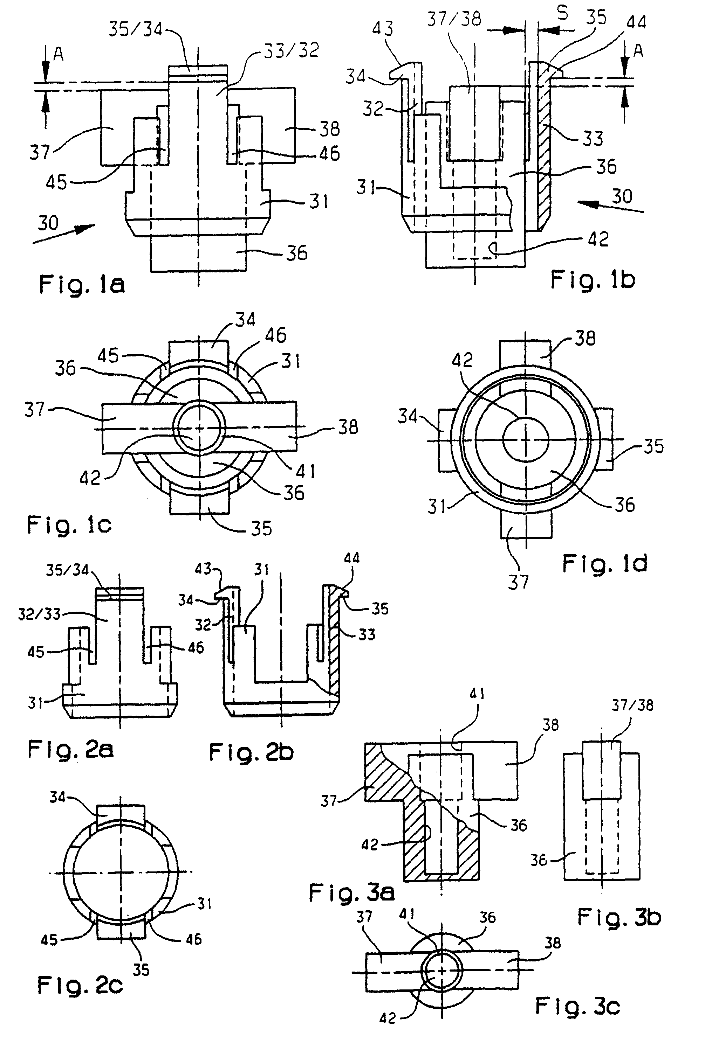

Bei dem in den Figuren 1a - d dargestellten Ausführungsbeispiel handelt es sich um eine Kunststoffmutter, bei der der Flansch mit Schnapphaken versehen ist.

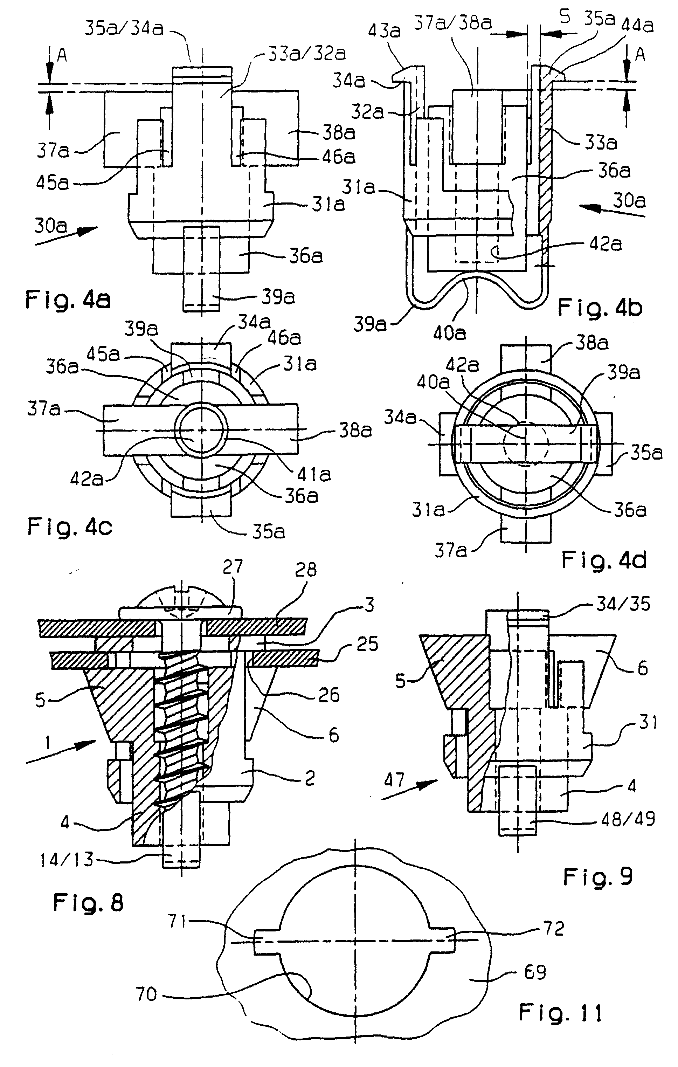

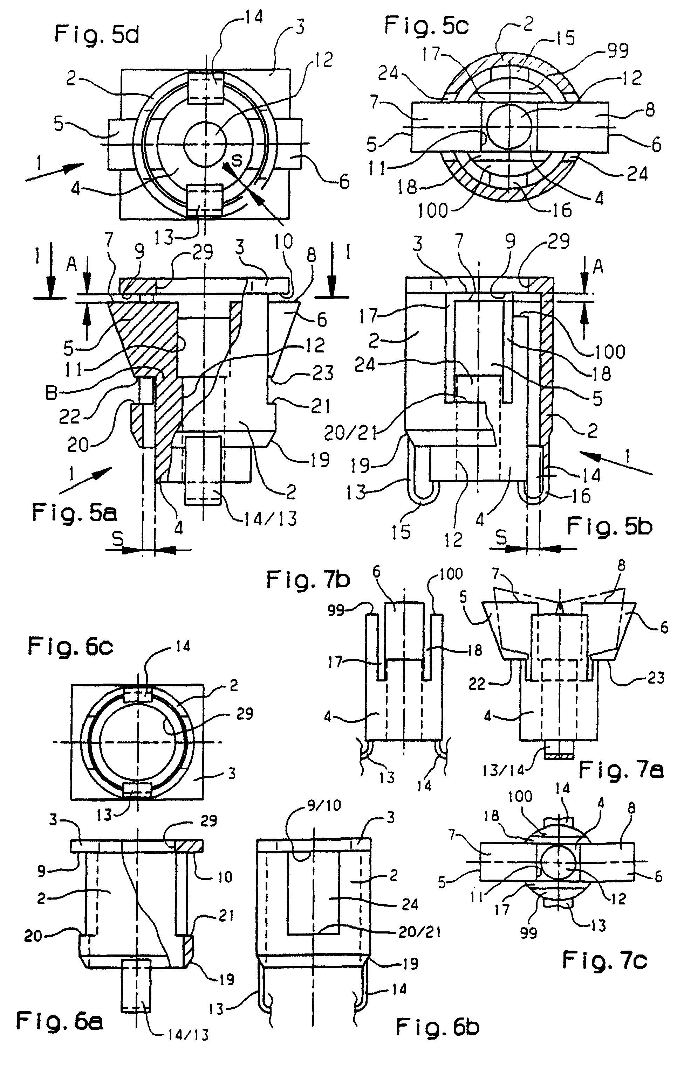

Die Figuren la und b zeigen die Kunststoffmutter 30 jeweils von der Seite gesehen in vollständiger Zusammenstellung mit Flanschteil 31, das in Flanschsegmente 32, 33 übergeht, die radial nach außen hin in den Schnapphaken 34, 35 enden. Das Flanschteil 31 umgibt das Mutterteil 36 hülsenartig, und zwar derart, daß sich das Mutterteil 36 in axialer Richtung gegenüber dem Flanschteil 31 verschieben läßt. Aus dem Mutterteil 36 ragen radial nach außen die beiden Widerlager 37, 38, die deutlich aus der Einzeldarstellung des Mutterteils 36 gemäß den Figuren 3a - c hervorgehen. Die Widerlager 37 und 38 sind im wesentlichen starr mit dem Mutterteil 36 verbunden. Figur lc zeigt eine Ansicht der Kunststoffmutter 30 von oben her gesehen, die deutlich die beiden Widerlager 37 und 38 und die Schnapphaken 34 und 35 zeigt. Außerdem erkennt man in Figur 1c die Aufnahmebohrung, bestehend aus dem Durchgangsloch 41 und dem hier als Sackloch ausgebildeten engeren Bereich 42, die in gleicher Weise wirken wie die gleichbezeichneten Teile gemäß den Figuren 5a - d. Figur 1d zeigt die Kunststoffmutter 30 von unten gesehen. Die Begrenzung der Axialbeweglichkeit von Mutterteil 36 gegenüber dem Flanschteil 31 ist hier in gleicher Weise gestaltet wie beim Ausführungsbeispiel gemäß Figur 5.

In den Figuren 2a - c ist das Flanschteil 31 in drei Ansichten einzeln dargestellt. Die Figuren 3a - c zeigen das Mutterteil 36 einzeln.

Figuren 4a bis d zeigen die in den Figuren la bis d dargestellte Kunststoffmutter, allerdings ergänzt durch eine elastische Stützanordnung 39a,40a, die eine Federzone bildet. Für die Darstellungen in den Figuren 1, 2 und 3 sowie 4 sind gleiche Bezugszeichen verwendet, wobei im Zusammenhang mit der Kunststoffmutter gemäß Figur 4a bis d alle Bezugszeichen durch ein "a" ergänzt sind.

Der Zusammenhang zwischen dem Mutterteil 36a und dem Flanschteil 31a wird durch die wellenartig geformte Stützanordnung 39a, 40a herbeigeführt, die jeweils mit einem Schenkel aus dem Flanschteil 31a in Richtung von den Schnapphaken 34a, 35a weg herausragt und die Wellenlinie mit dem Scheitel 40a bildet, der gegen die ihm zugewandte Stirnseite des Mutterteils 36a drückt. Aufgrund der Elastizität der Stützanordnung 39a, 40a läßt sich das Mutterteil 36a von den Schnapphaken 34a, 35a weg verschieben, womit der in Figur 4b eingezeichnete Abstand A (siehe auch Figur 1b) sich entsprechend verändern, insbesondere vergrößern läßt.

Wenn die Stützanordnung 39a, 40a in irgendeiner Weise mit der Stirnseite des Mutterteils 36a verbunden wird, z.B. durch Ankleben, ergibt sich eine feste Verbindung zwischen Flanschteil 31a und Mutterteil 36a, die auch einstückig ausgebildet sein kann, wenn Mutterteil 36a und Flanschteil 31a zusammen mit der Stützanordnung 39a, 40a in einem Vorgang aus Kunststoff gespritzt werden. Im übrigen wird bezüglich der Gestaltung und Wirkungsweise der Kunststoffmutter gemäß Figur 4a bis d auf die entsprechenden Erläuterungen zu Figur la bis d verwiesen.

Bei dem in den Figuren 5a bis d dargestellten Ausführungsbeispiel handelt es sich um eine Kunststoffmutter, bei der das Mutterteil mit Schnapphaken versehen ist.

Figuren 5 a und b zeigen die Kunststoffmutter 1 jeweils von der Seite gesehen in vollständiger Zusammenstellung mit Flanschteil 2, das in den Flansch 3 übergeht. Das Flanschteil 2 umgibt das Mutterteil 4 hülsenartig, und zwar derart, daß sich das Mutterteil 4 in axialer Richtung gegenüber dem Flanschteil 2 verschieben läßt. Aus dem Mutterteil 4 ragen radial nach außen die beiden Schnapphaken 5 und 6, deren dem Flansch 3 zugewandte Anlageflächen 7 und 8 den Abstand A von den dem Mutterteil 4 zugewandten Anlagenflächen 9 und 10 einhalten. Dieser Abstand A ergibt sich im unmontierten Zustand der Kunststoffmutter 1. Um in der Figur 5a die innere Gestaltung der Kunststoffmutter 1 deutlich zu machen, ist in der Figur 5a ein dem Betrachter zugewandter Teil des Flanschteils 2 und des Mutterteils 4 weggebrochen, so daß eine Aufnahmebohrung für eine nicht dargestellte Schraube in dem Mutterteil 4 sichtbar wird, die das Durchgangsloch 11 und den daran anschließenden engeren Bereich 12 bildet, der einen geringeren Durchmesser aufweist als das Durchgangsloch 11, so daß eine in die Aufnahmebohrung 11/12 eingedrehte Schraube zunächst im Bereich des Durchgangslochs 11 frei geführt wird und bei weiterem Eindrehen in den engeren Bereich 12 sich entweder in diesem Bereich ein Gewinde selbst furcht oder sich in ein im Bereich 12 bereits vorhandenes Gewinde einschraubt (welches in der Figur 5a nicht dargestellt ist). Das Durchgangsloch 11 setzt sich in Richtung auf den Flansch 3 in dem runden Durchbruch 29 im Flansch 3 fort, so daß eine in die Kunststoffmutter 1 einzuführende Schraube durch den Flansch 3 hindurchgeführt und in das Durchgangsloch 11 eingeführt werden kann. Wie ersichtlich, hat der Durchbruch 29 einen größeren Durchmesser als das Durchgangsloch 11, so daß von der Seite des Flansches 3 her durch ein Werkzeug ein axialer Druck auf die in Figur 5c sichtbaren Stirnflächen 99/100 des Mutterteils 4 ausgeübt werden kann, unter dessen Einfluß sich die Kunststoffmutter 1 dann in das Durchgangsloch eines Bauteils eindrücken läßt.

Das Flanschteil 2 und das Mutterteil 4 sind über die beiden elastischen Bänder 13 und 14 miteinander verbunden. Die elastischen Bänder 13 und 14 ragen mit einem Schenkel aus dem Flanschteil 2 in Richtung vom Flansch 3 weg und bilden ein U, das mit seinem anderen Schenkel an die dem Flansch 3 abgewandte Seite des Mutterteils 4 heranführt und mit diesem fest verbunden ist. Im vorliegenden Falle handelt es sich um ein aus Flanschteil 2 und Mutterteil 4 bestehendes einstückiges Kunststoffbauteil, das in einem Stück gespritzt wird, so daß die beiden elastischen Bänder 13 und 14 ebenfalls aus Kunststoff bestehen und aufgrund ihrer relativ geringen Dicke eine ausreichende Elastizität besitzen. Aufgrund dieser Elastizität läßt sich das Mutterteil 4 axial vom Flansch weg verschieben, womit sich der Abstand A entsprechend vergrößern läßt.

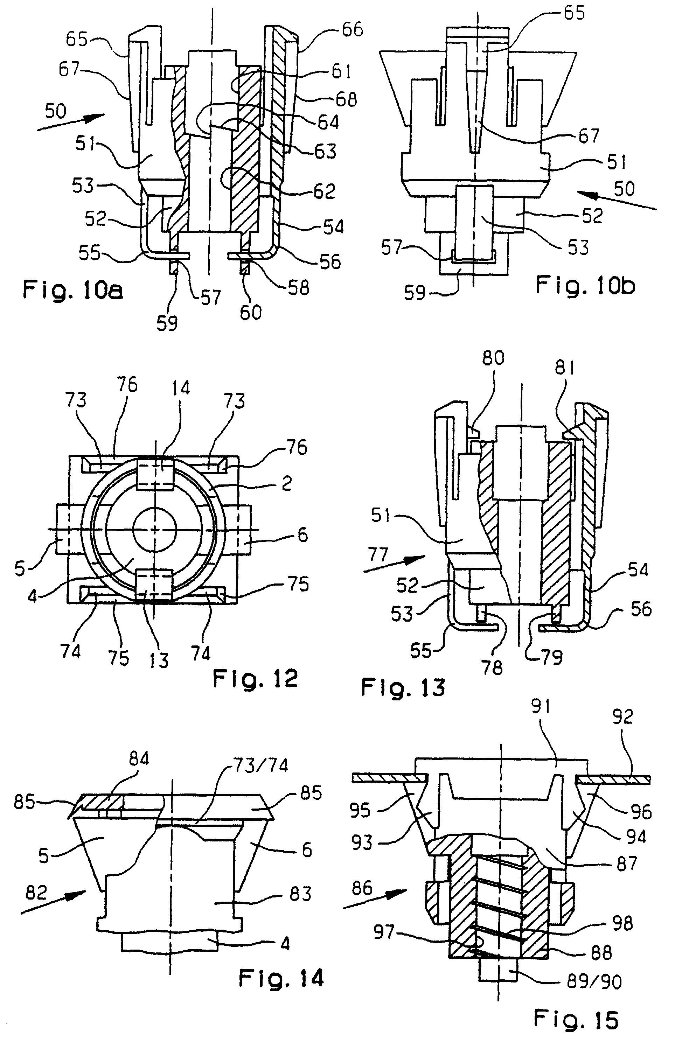

Das Flanschteil 2 führt das Mutterteil 4 mit dem eine radiale gegenseitige Verschiebung ermöglichenden Spiel S (siehe Figuren 5a, b und d). Dieses Spiel S wird durch den in den vorstehend genannten drei Figuren eingezeichneten Abstand zwischen Flanschteil 2 und Mutterteil 4 in dem Bereich gebildet, in dem das Flanschteil 2 das Mutterteil 4 hülsenartig umgibt. Aufgrund dieser Gestaltung läßt sich das Mutterteil 4 in radialer Richtung gegenüber dem Flanschteil verschieben, wobei die Bänder 13, 14 aufgrund ihrer Elastizität entsprechend nachgeben. Hierdurch lassen sich Toleranzen der Abmessungen von Flanschteil 2 und Mutterteil 4 ausgleichen, außerdem wird hierdurch eine Anpassung des Mutterteils 4 an eine ggf. versetzte Schraube (siehe Figur 8) im Rahmen des Spiels S ermöglichen.

Figur 5c zeigt den Schnitt längs der Linie I-I, so daß in der Figur 5c die Auflageflächen 7 und 8 sichtbar sind. Außerdem erkennt man die gebogenen Teile 15 und 16 der Bänder 13, 14 die das Flanschteil 2 und das Mutterteil 4 miteinander verbinden. Für eine elastische Beweglichkeit der Schnapphaken 5 und 6 sorgen die Schlitze 17 und 18, die in das Mutterteil 4 von der Seite des Flansches 3 her hineinreichen. Hierdurch bleibt nur der Bereich B im Mutterteil stehen, der einen die Beweglichkeit der Schnapphaken 5 und 6 gewährleistenden Querschnitt besitzt.

Figur 5d zeigt die Kunststoffmutter von der dem Flansch 3 abgewandten Seite her gesehen, wobei dem Betrachter die beiden Schnapphaken 5 und 6 sowie die elastischen Bänder 13 und 14 zugewandt sind. Außerdem sieht der Betrachter den engeren Bereich 12 und das hülsenartig das Mutterteil 4 umgebende Flanschteil 2.

Es sei noch darauf hingewiesen, daß das Flanschteil 2 an seiner dem Flansch 3 abgewandten Seite mit einer Einlaufschräge 19 versehen ist, die das Einführen der Kunststoffmutter 1 in das Durchgangsloch eines Bauteils erleichtert, das auch automatisch erfolgen kann.

Figur 5 a zeigt außerdem in dem dem Flansch 3 abgewandten Bereich des Flanschteils 2 den Anschlag 20, 21, der an dem Flanschteil 2 zwischen den Schlitzen 17 und 18 verläuft und mit dem entsprechenden Anschlag 22, 23 an den Schnapphaken 5 und 6 zusammenwirkt. Das Mutterteil 4 mit den Schnapphaken 5 und 6 kann sich daher nur so weit vom Flansch 3 wegdrücken lassen, bis die Anschläge 20-22 und 21-23 aufeinandertreffen und damit die Verschiebung des Mutterteils 4 gegenüber dem Flanschteil 2 begrenzen. Damit ist auch der maximale Abstand A zwischen den Auflageflächen 7/9 und 8/10 definiert, das heißt mit der Kunststoffmutter 1 lassen sich entsprechend dicke plattenförmige Bauteile bestücken.

Figur 5c zeigt im Flanschteil 2 jeweils ein Fenster 24 (siehe auch Figur 6b), das der Schnapphaken 5 bzw. 6 durchsetzt. Die axial verlaufenden Ränder des Fensters 24 bilden dabei Anschläge für die Begrenzung einer Verdrehung des Mutterteils 4 gegenüber dem Flanschteil 2, womit das Flanschteil 2 das Mutterteil 4 verdrehungssicher führt.

In den Figuren 6a bis c ist in drei Ansichten das Flanschteil 2 allein dargestellt, und zwar mit den zu ihm führenden Schenkeln der elastischen Bänder 13 und 14.

Aus Figur 6b ist noch das Fenster 24 im Flanschteil 2 ersichtlich, durch das die Schnapphaken 5 und 6 des Mutterteils 4 hindurchragen. Die Breite des Fensters 24 ist auch aus Figur 5b ersichtlich, da diese durch die äußeren Wandungen der Schlitze 17 und 18 bestimmt ist.

In Figur 7a bis c ist das Mutterteil 4 für sich in drei Ansichten dargestellt, wobei in Figur 7a die beiden Schnapphaken 5 und 6 in zusammengebogener Lage strichpunktiert eingezeichnet sind. Hierdurch soll angedeutet werden, wie sich die Schnapphaken 5 und 6 bewegen, wenn sie in ein Durchgangsloch eines Bauteils eingesetzt werden. Wenn das Mutterteil 4 der betreffenden Kunststoffmutter mit ihrem Flansch 3 auf dem Bauteil auftrifft, federn die Schnapphaken 5 und 6 in ihre Normallage zurück und rasten damit hinter dem Bauteil ein.

Figur 8 zeigt die Kunststoffmutter 1 gemäß den Figuren 5a bis d, 6a bis c und 7a bis c, verbunden mit dem plattenartigen Bauteil 25, das zwischen dem Flansch 3 und den Schnapphaken 5 und 6 gehalten ist, wobei aufgrund der den elastischen Bändern 13 und 14 innewohnenden Spannung der Flansch 3 und die Schnapphaken 5 und 6 zusammengedrückt werden. In dieser Position, in der das Flanschteil 2 das Durchgangsloch 26 des Bauteils 25 durchsetzt, wird zum Befestigen eines Bauelementes 28 (Baugruppe) die Schraube 27 in das Mutterteil 4 eingedreht, die mit ihrem Kopf das Bauelement 28 an die Kunststoffmutter 1 und damit an das plattenartige Bauteil 25 heranzieht und auf diese Weise an dem Bauteil 25 befestigt.

Bei dem plattenartigen Bauteil 25 kann es sich z.B. um irgendeine Verkleidung in einem Verkehrsmittel handeln, an der irgendwelche Amaturen, Baugruppen oder dergleichen zu befestigen sind, wofür eine dauerhafte belastbare und rüttelsichere Verbindung erforderlich ist, für die die Wandstärke des Bauteils allein normalerweise keine ausreichende Festigkeit bietet. Dabei liefert die erfindungsgemäße Kunststoffmutter den Vorteil, daß die Anbringung der genannten Baugruppen und dergleichen nur eine Manipulation von der Seite der Anbringung der Baugruppe erforderlich macht, also kein Hintergreifen hinter das Bauteil, z.B. das Festhalten einer Mutter, notwendig macht, da die erfindungsgemäße Kunststoffmutter aufgrund ihrer Gestaltung und Anbringung praktisch zu einem Bestandteil des plattenartigen Bauteils wird. Dabei kommt die sich automatisch ergebende Länge der Kunststoffmutter mit ihrem Mutterteil der Festigkeit der Verbindung von Bauteil und Baugruppe dadurch zugute, daß eine in die Kunststoffmutter eingedrehte Schraube über die Länge des Mutterteils sich mit einer Mehrzahl von Gewindegängen festhalten kann, womit sich für die Schraube in dem Mutterteil eine solide Verankerung ergibt.

Die in der Figur 4 dargestellte Kunststoffmutter 30a läßt sich vorteilhaft von der der elastischen Stützanordnung 39a, 40a abgewandten Seite her in das Durchgangsloch eines Bauteiles einsetzen, wobei die Flanschsegmente 32a und 33a führen. Dabei treffen die Schnapphaken 34a, 35a mit ihren Einführschrägen 43a, 44a auf den Rand des Durchgangslochs auf, wodurch die Schnapphaken 34a, 35a leicht radial nach innen zu zusammengebogen werden. Dies wird durch die Schlitze 45a, 46a ermöglicht, die von der Seite der Schnapphaken 34a, 35a her in das Flanschteil 31a hineinragen. Bezüglich der elastischen Beweglichkeit der Schnapphaken 34a, 35a sei auf die obigen Erläuterungen zum Bereich B aus Figur 5a verwiesen. Die Anbringung der Kunststoffmutter 30a an einem plattenartigen Bauteil ähnlich demjenigen gemäß Figur 8 (Bezugszeichen 25) erfolgt, wie vorstehend dargelegt, durch Einführen der Kunststoffmutter 30a in das Durchgangsloch 26 (Fig.8), bis die Schnapphaken 34a, 35a nach außen springen und sich hinter das Bauteil 25 setzen, das von seiner anderen Seite her sich an den Widerlagern 37a und 38a abstützt. Im Falle eines Bauteils, das dicker als der in Figur 4b eingezeichnete Abstand A ist, ergibt sich dabei ein Wegschieben des Mutterteils 36a von den Schnapphaken 34a, 35a, wobei die Stützanordnung 39a,40a unter Spannung gesetzt wird und hierdurch die Schnapphaken 34a, 35a an das Bauteil 25 von dessen einer Seite her und die Widerlager 37a, 38a von der anderen Seite her gegen das Bauteil 25 drückt, womit die Kunststoffmutter 30a unverlierbar und rüttelsicher an dem Bauteil 25 angebracht ist. Ein weiteres Bauelement kann dann in der gleichen Weise mittels einer Schraube an der Kunststoffmutter 30a und damit an dem genannten Bauteil befestigt werden, wie das anhand der Figur 8 weiter oben erläutert ist.

Wie oben dargelegt, handelt es sich bei der Kunststoffmutter 1 gemäß den Figuren 5 bis 7 um eine solche, bei der nur das Mutterteil 4 mit Schnapphaken 5, 6 versehen ist, so daß die Richtung des Einführens der Kunststoffmutter 1 in das Durchgangsloch 26 eines Bauteils 25 unter Führung durch die elastischen Bänder 13 und 14 erfolgt, wogegen die Kunststoffmutter 30 gemäß den Figuren 1 bis 3 mit Schnapphaken 34, 35 an den Flanschsegmenten 32, 33 versehen ist, so daß die Anbringung dieser Kunststoffmutter 30 an einem Bauteil unter Führung dieser Schnapphaken 34, 35 vor sich geht.

Nachstehend wird anhand der Figur 9 ein weiteres Ausführungsbeispiel erläutert, das so gestaltet ist, daß es sowohl von der einen als auch von der anderen Seite des Bauteiles her in dieses eingeschoben werden kann.

Die Kunststoffmutter 47 gemäß Figur 9 besitzt hinsichtlich des Mutterteiles im wesentlichen die gleiche Struktur wie das Mutterteil 4 gemäß Figur 5 und 7. Es weist die beiden Schnapphaken 5 und 6 auf (gleiche Bezugszeichen wie in Figur 5). Die beiden Schnapphaken 5 und 6 lassen sich, wie in Figur 7a dargestellt, zusammendrücken, so daß also das Mutterteil 4 mit den dabei führenden elastischen Bändern 48, 49 in das betreffende Bauteil eingeschoben wird. Andererseits kann die Kunststoffmutter 47 auch in umgekehrter Richtung in das Durchgangsloch eines Bauteiles eingeschoben werden, nämlich mit den dabei führenden Schnapphaken 34/35, die den mit den gleichen Bezugszeichen versehenen Schnapphaken gemäß Figur 1 entsprechen. Die Kunststoffmutter 47 ist durch die Anordnung der Schnapphaken 5 und 6 und der Schnapphaken 34 und 35 somit universell verwendbar.

In den Figuren 10a und b ist eine Kunststoffmutter 50 dargestellt, bei der der Zusammenhalt zwischen dem Flanschteil 51 und dem Mutterteil 52 in einer gegenüber den Ausführungsbeispielen gemäß den Figuren 4 und 5 etwas veränderten Weise erfolgt. Die grundsätzliche Gestaltung der Kunststoffmutter 50 entspricht derjenigen gemäß den Figuren la bis d, so daß bezüglich des Zusammenwirkens von Flanschteil 51 und Mutterteil 52 auf die Erläuterungen zu diesen Figuren verwiesen werden kann. Gemäß Figur 10a und b bilden die elastischen Bänder 53, 54 eine Art Haken, der aus dem unteren Ende des Flanschteiles 51 herausragt und radial nach innen zu abgebogen ist. Die jeweilige Abbiegung 55, 56 ragt jeweils in ein Loch 57, 58 hinein, das in einem Arm 59, 60 ausgebildet ist. Die Arme 59, 60 ragen von dem Mutterteil 52 weg und bilden mit ihren Löchern 57, 58 Aufnahmen für die Abbiegungen 55, 56 der elastischen Bänder 53, 54. Die bei den Ausführungsbeispielen gemäß den Figuren 4 und 5 dargestellte direkte einstückige Verbindung der dort eingezeichneten Bänder 13, 14 bzw. 39a, 40a mit dem betreffenden Mutterteil 4 bzw. 36 ist bei dem Ausführungsbeispiel gemäß Figur 10a und b also durch die Abwinkelungen 55, 56 und die zugehörigen Löcher 57, 58 ersetzt. Die Kunststoffmutter 50 besteht somit aus zwei einzeln spritzbaren Teilen, die dadurch zusammengefügt werden, daß beim Einführen des Mutterteiles 52 in das das Mutterteil 52 hülsenartig umgebenden Flanschteil 51 die Abwinkelungen 55, 56 zunächst nach außen weggebogen werden, bis die Abwinkelungen den Löchern 57, 58 gegenüberstehen, woraufhin man die Abwinkelungen 57, 58 in die genannten Löcher einschnappen läßt, was aufgrund der Elastizität der Bänder 53, 54 ohne weiteres möglich ist. Für die beim Anbringen der Kunststoffmutter 50 erforderliche Verschiebbarkeit des Mutterteiles 52 gegenüber dem Flanschteil 51 geben dann die Bänder 53, 54 mit ihren Abwinkelungen 55, 56 den notwendigen Spielraum her, so daß die Kunststoffmutter 50 in der gleichen Weise an einem Bauteil angebracht werden kann, wie dies oben insbesondere im Zusammenhang mit den Figuren 4 und 9 beschrieben ist.

In Figur 10a ist eine Stufe 64 in der Aufnahmebohrung des Mutterteiles 52, bestehend aus Durchgangsloch 61 und engerer Bereich 62, dargestellt, die dadurch entsteht, daß im Bereich des Überganges von Durchgangsloch 61 zum engeren Bereich 62 gewindeartige Schrägen 63 gebildet sind, wodurch das Eindringen des ersten Gewindeganges einer einzudrehenden Schraube in den engeren Bereich 62 wesentlich erleichtert wird. Eine solche Gestaltung des Durchgangsloches kann natürlich auch bei den vorstehend erläuterten Ausführungsbeispielen vorgesehen werden.

In der Figur 10b ist eine gegenüber der Figur 10a um 90° gedrehte Seitenansicht der Kunststoffmutter 50 dargestellt, die eine weitere Besonderheit dieser Kunststoffmutter zeigt, nämlich die am Flanschteil 51 radial nach außen ragenden Vorsprünge 65, 66. Die Vorsprünge 65, 66 sind mit Einlaufschrägen 67, 68 versehen, die das Einstecken der Kunststoffmutter 50 in das Durchgangsloch eines Bauteiles erleichtern, das ausschnittsweise in der Figur 11 dargestellt ist.

Figur 11 zeigt die Draufsicht auf einen Ausschnitt eines Bauteiles 69, das das runde Durchgangsloch 70 mit den beiden Aussparungen 71, 72 zeigt, in die die aus den Figuren 10a und b ersichtlichen Vorsprünge 65, 66 passen. Aufgrund des Zusammenwirkens der Vorsprünge 65/66 mit den Aussparungen 71 und 72 ergibt sich eine Verdrehsicherung des Flanschteiles 51 gegenüber dem Bauteil 69. Der Durchmesser des Durchgangslochs 70 ist so gewählt, daß in das betreffende Durchgangsloch 70 das hülsenartige Flanschteil 51 ungehindert eingesetzt werden kann.

Eine Verdrehsicherung für das Flanschteil gegenüber einem Bauteil läßt sich auch bei der Kunststoffmutter 1 gemäß den Figuren 5a bis d entsprechend gestalten, und zwar durch Anbringung von Balken an der dem betreffenden Bauteil zugewandten Seite des Flansches 3, wie dies in der Figur 12 dargestellt ist. Die Kunststoffmutter gemäß dieser Figur entspricht völlig derjenigen gemäß den Figuren 5a bis d, wobei die Figur 12 sich von der Figur 5d insoweit unterscheidet, als gemäß Figur 12 an dem Flansch 3 lediglich noch die Balken 73, 74 angebracht sind, die dann in ein entsprechend viereckig gestaltetes Durchgangsloch eines Bauteiles einzuführen sind und damit in diesem Durchgangsloch die Verdrehsicherung des Flansches 3 und damit der Kunststoffmutter gegenüber dem betreffenden Bauteil bewirken.

Um das Einsetzen der Kunststoffmutter gemäß Figur 12 in ein rechteckiges Durchgangsloch zu erleichtern, sind die Balken 73, 74 jeweils mit Einlaufschrägen 75, 76 versehen.

In der Figur 13 ist eine Variante der Kunststoffmutter 50 gemäß Figur 10a, b dargestellt, die sich von der Kunststoffmutter 50 nur durch die Gestaltung des Zusammenhaltes zwischen Flanschteil 51 und Mutterteil 52 unterscheidet. Die Kunststoffmutter 77 gemäß Figur 13 besitzt prinzipiell die gleichen elastischen Bänder wie die Kunststoffmutter 50. Jedoch bilden ihre Abwinkelungen 55 und 56 lediglich Anschläge gegenüber den bei der Kunststoffmutter 77 verkürzten Armen 78, 79, die somit das Einführen des Mutterteiles 52 in das Flanschteil 51 begrenzen. Zur Verhinderung einer Bewegung des Mutterteiles 52 in rückwärtiger Richtung sind an dem Flanschteil 51 besondere Rastnasen 80, 81 vorgesehen, die aufgrund ihrer Einführschrägen ein Einsetzen des Mutterteils 52 in das Flanschteil 51 ermöglichen bzw. erleichtern. Nach vollständigem Einführen des Mutterteiles 52 in das Flanschteil 51 rasten die Rastnasen 80, 81 hinter das Mutterteil 52, so daß dieses hinsichtlich seines Bewegungsspielraumes in Vorwärts- als auch in Rückwärtsrichtung begrenzt ist. Der notwendige Spielraum der Bewegung des Mutterstücks 52 gegenüber dem Flanschteil 51 bleibt dabei aufgrund der Flexibilität der Abwinkelungen 55, 56 erhalten.

Die erfindungsgemäße Kunststoffmutter läßt sich vorteilhaft mit einer Abdichtung versehen. Dies sei anhand der Figur 14 erläutert, die eine Kunststoffmutter 82 zeigt, die im Prinzip der Kunststoffmutter 1 gemäß Figur 5 entspricht. Aus diesem Grunde sind in Figur 14 auch nur die in diesem Zusammenhang wesentlichen Bestandteile der Kunststoffmutter im einzelnen dargestellt. Wie ersichtlich, besitzt die Kunststoffmutter 82 die beiden Schnapphaken 5 und 6 des Mutterteils 4 (wie auch in Figur 5a dargestellt), wobei jedoch das Flanschteil 83 gegenüber demjenigen gemäß Figur 5 abgewandelt ist. Das Flanschteil 83 endet nämlich in dem Flansch 84, der an seinem Rand mit der umlaufenden Dichtlippe 85 versehen ist. Die Dichtlippe 85 legt sich an das von der Kunststoffmutter durchsetzte Bauteil an und bewirkt auf diese Weise eine Abdichtung zwischen Flansch 84 und Bauteil. Der Unterschied zwischen der Ausführungsform gemäß Figur 5 und derjenigen gemäß Figur 14 besteht im wesentlichen also nur darin, daß der Flansch 3 gemäß Figur 5 durch den Flansch 84 mit der Dichtlippe 85 ersetzt ist. Dabei kann es sich um ein aufgesetztes Dichtteil mit der Dichtlippe 85 handeln. Es ist aber auch möglich, den Flansch 84 selbst als Dichtteil mit der Dichtlippe 85 auszubilden. Es sei noch darauf hingewiesen, daß in Figur 14 die aus Figur 12 ersichtliche Verdrehsicherung in Form der Balken 73/74 eingezeichnet ist.

In Figur 15 ist eine weitere Ausführungsform einer Kunststoffmutter 86 dargestellt, die im Prinzip der Kunststoffmutter 1 gemäß Figur 5 entspricht. Die Kunststoffmutter 86 weist das Flanschteil 87 und das Mutterteil 88 auf, die über die elastischen Bänder 89/90 miteinander verbunden sind. Das Flanschteil 87 geht in den Flansch 91 über, der hier, anders als beim Ausführungsbeispiel gemäß Figur 5, an seiner dem Bauteil 92 zugewandten Seite mit den Rastnasen 93, 94 versehen ist. Die Anbringung der Kunststoffmutter 86 an dem Bauteil 92 erfolgt in der gleichen Weise, wie dies beim Ausführungsbeispiel gemäß Figur 1 der Fall ist, wobei die Schnapphaken 95, 96 entsprechend zurückweichen und schließlich hinter dem Bauteil 92 einrasten. Außerdem rasten dabei die Rastnasen 93, 94 hinter dem Bauteil 92 ein. Diese zusätzliche Sicherung der Kunststoffmutter 86 an dem Bauteil 92 hat den Sinn, daß mittels der Schnapphaken 95, 96 in Verbindung mit der Wirksamkeit der Bänder 89, 90 ein bestimmter Dickenbereich des Bauteils 92 überbrückt wird, beispielsweise 1 - 5 mm. Dies bedeutet, daß im Falle einer Anbringung der Kunststoffmutter 86 an einem Bauteil 92 mit nur 0,5 mm Dicke die Kunststoffmutter 86 eventuell lose angebracht ist, was in vielen Anwendungsfällen unerwünscht ist. Um trotzdem die Kunststoffmutter 86 im Falle der Anbringung an einem derart dünnen Blech rüttelsicher zu gestalten, sind die Rastnasen 93 und 94 vorgesehen, die so gestaltet sind, daß sie sich federnd hinter den Rand eines besonders dünnen Bauteils 92 setzen können und dabei das Flanschteil 87 rüttelsicher an dem Bauteil 92 halten.

Die Kunststoffmutter 86 gemäß Figur 15 enthält weiterhin das in den engeren Bereich 97 eingearbeitete Gewinde 98, das für die Aufnahme einer mit einem entsprechenden Gewinde versehenen Schraube vorgesehen ist. Ein derartiges Gewinde kann natürlich bei allen vorstehend beschriebenen Kunststoffmuttern vorgesehen sein.

Bei dem in den Figuren 1 bis 3 dargestellten Ausführungsbeispiel wird das Mutterteil 36 im Flanschteil 31 mit axialer Beweglichkeit lose gehalten. Es wird in Richtung von den Schnapphaken 34/35 weg durch Anschläge ähnlich denjenigen gemäß Figur 5 (Bezugszeichen 20/22, 21/23) gestoppt, könnte aber in Richtung zum Flansch 34/35 herausgleiten. Um dies zu verhindern, kann auch beim Ausführungsbeispiel gemäß den Figuren 1 bis 3 eine zusätzliche innere Rastnase vorgesehen werden, wie sie in Figur 13 mit Bezugszeichen 80 und 81 dargestellt ist.

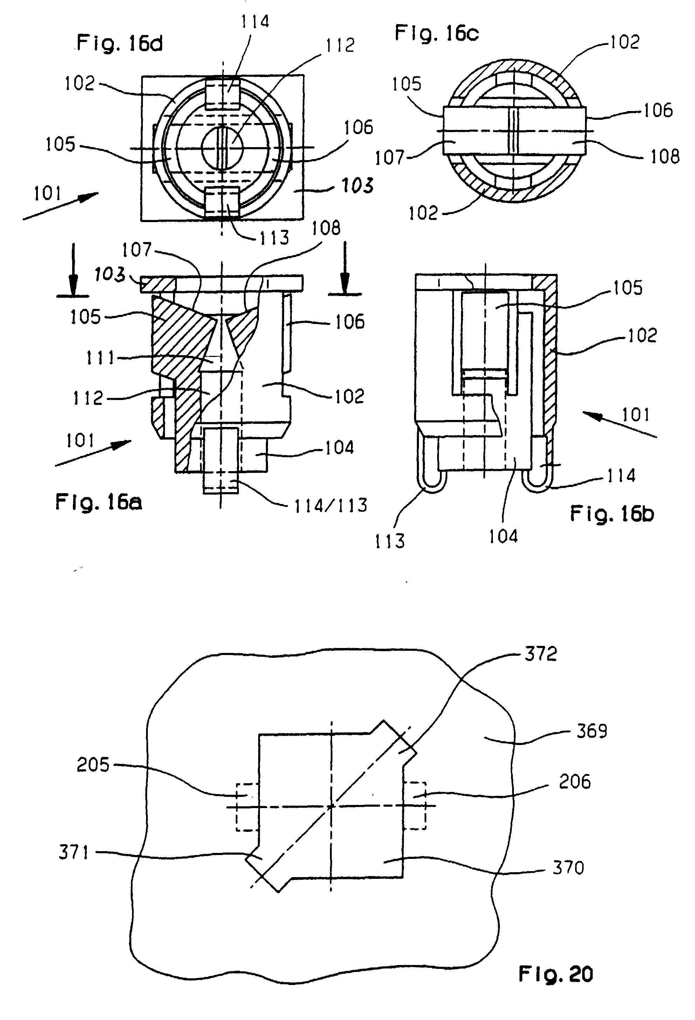

Bei dem in den Figuren 16a - d dargestellten Ausführungsbeispiel handelt es sich um eine Kunststoffmutter 101, bei der das Einrasten der Schnapphaken 105 und 106 beim Eindrehen einer Schraube (siehe Schraube 27 in Figur 8 der Patentanmeldung 196 39 396) erfolgt. Die Kunststoffmutter 101 entspricht weitgehend derjenigen gemäß den Figuren 5a - d der Patentanmeldung 196 39 396, bei der die Schnapphaken 5 und 6 der Kunststoffmutter 1 in ihrer entspannten Lage, radial nach außen gespreizt, dargestellt sind, die sich dabei hinter ein nicht eingezeichnetes Bauteil setzen. Demgegenüber nehmen die Schnapphaken 105 und 106 der Kunststoffmutter 101 gemäß den Figuren 16a - d im entspannten Zustand eine Lage ein, in der sie aufeinander zugeneigt sind, wie insbesondere aus Figur 16a deutlich hervorgeht. Bezüglich der weiteren Bestandteile der Kunststoffmutter 101 und ihrer Funktionen sei auf die Erläuterungen zu den genannten Figuren 5a - d verwiesen. Zur Erleichterung des Verständnisses sind die Bezugszeichen aus den Figuren 5a - 5d um die Zahl "100" erweitert.

Die Kunststoffmutter 101 läßt sich in ihrer entspannten Lage gemäß Figur 16a in ein rundes Durchgangsloch einsetzen, wie es in Figur 11 der Patentanmeldung 196 39 396 dargestellt ist (dort zusätzlich mit den Aussparungen 71 und 72, die im Falle der Verwendung zusammen mit der Kunststoffmutter 101 entfallen können). Nach Einsetzen der Kunststoffmutter 101 in ein Durchgangsloch (siehe Figur 8 der Patentanmeldung 196 39 396 Durchgangsloch 26 im plattenartigen Bauteil 25) läßt sich dann eine Schraube (Schraube 27 in Figur 8) in das Durchgangsloch 111 und den engen Bereich 112 des Mutterteils 104 eindrehen, wobei die beiden Schnapphaken 105 und 106 nach außen gedrückt werden und sich mit ihren Anlageflächen 107 und 108 gegen das Bauteil setzen und damit einrasten.

Diese Zusammenfügung von Kunststoffmutter, plattenartigem Bauteil und Schraube ist in der genannten Figur 8 dargestellt, so daß bezüglich der Wirkungsweise der Kunststoffmutter 101 gemäß den Figuren 16a - d auf die Figur 8 und die zugehörigen Erläuterungen verwiesen werden kann. In jedem Falle ergibt sich nach vollständigem Eindrehen einer Schraube in die Kunststoffmutter 101 eine Lage der Kunststoffmutter 101 mit ihren Schnapphaken 105 und 106, die den betreffenden Gestaltungsteilen aus Figur 8 entsprechen.

Die Gestaltung der Kunststoffmutter 101 erlaubt es, praktisch berührungsfrei die Kunststoffmutter in das Durchgangsloch eines Bauteils einzuführen, was insbesondere dann von Vorteil ist, wenn die Ränder des Durchgangslochs des Bauteils aus empfindlichem Material bestehen. Dies ist z.B. dann der Fall, wenn die Kunststoffmutter 101 in entsprechender Größe zum Einsetzen in Leichtbauelemente dient, wie sie beispielsweise bei der Innenverkleidung von Räumen üblich sind.

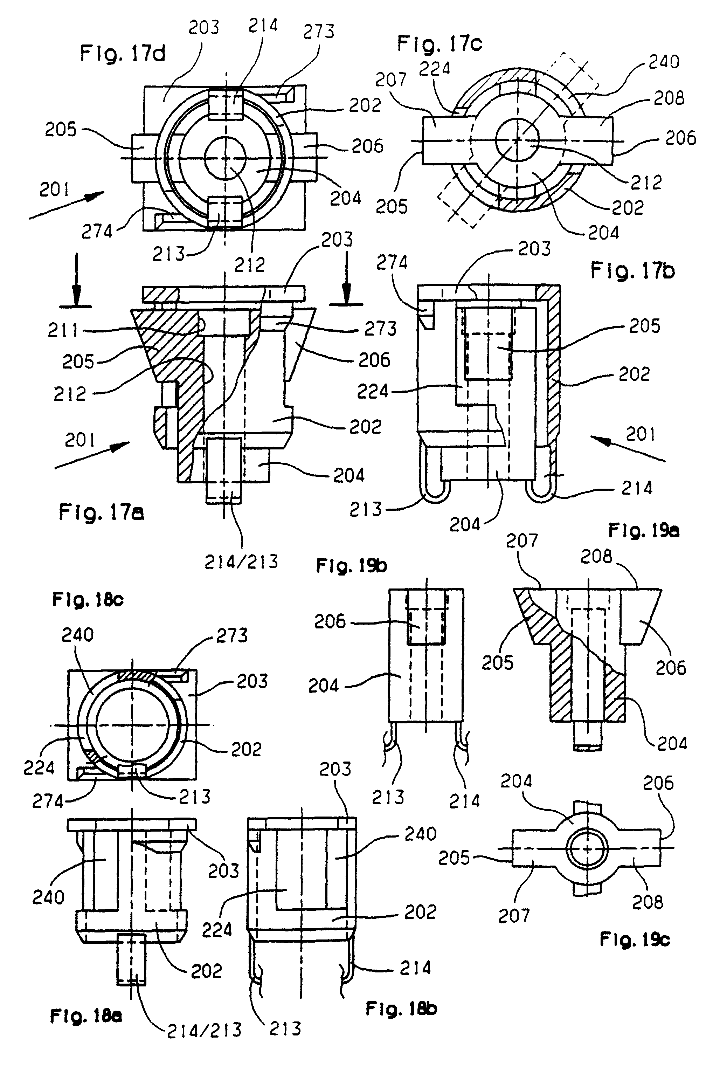

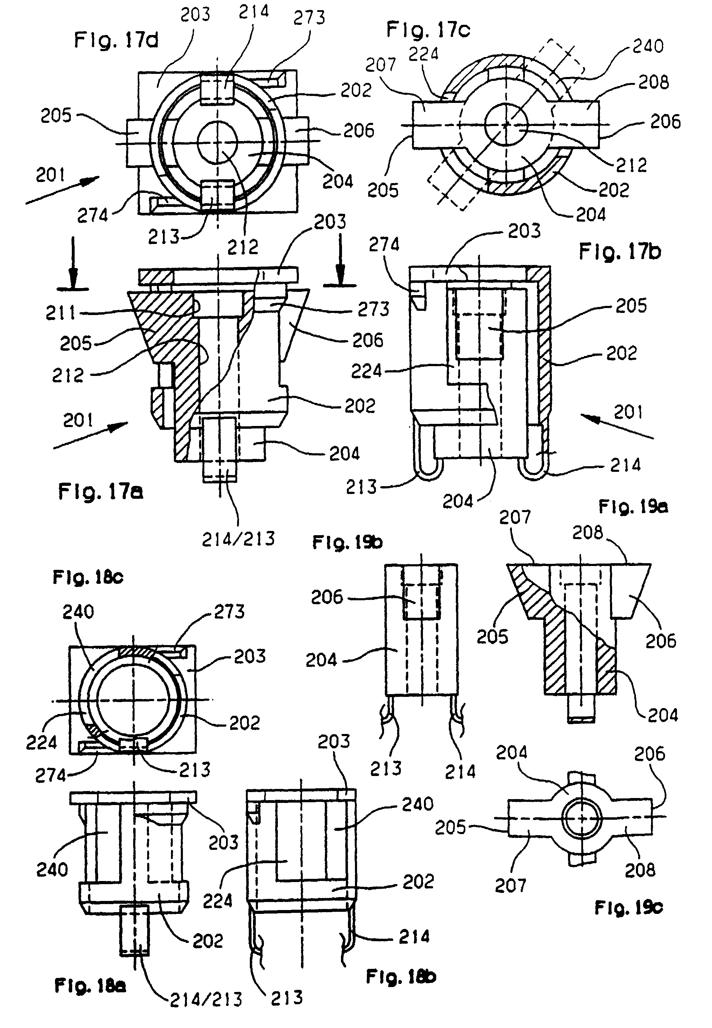

Bei dem in den Figuren 17a - d, 18a - c und 19a - c dargestellten Ausführungsbeispiel handelt es sich um eine Kunststoffmutter 201, die sich aufgrund drehfedernder Verbindung der Schnapphaken gegenüber dem Flanschteil sich an einem plattenartigen Bauteil hält.

Die Gestaltung der Kunststoffmutter 201 stimmt ebenfalls weitgehend mit derjenigen gemäß den Figuren 5a - d der Patentanmeldung 196 39 396.5 überein, so daß auf die zugehörigen Beschreibungsteile verwiesen werden kann, die hiermit in die vorliegende Beschreibung einbezogen werden. Zur Erleichterung des Verständnisses sind die Bezugszeichen aus den Fig. 5a - 5d, Fig. 6a - 6c und 7a - 7c um die Zahl "200" erweitert. Im Unterschied zu der Kunststoffmutter 1 gemäß den genannten Figuren 5a - d gehen die Schnapphaken 205 und 206 starr in das Mutterteil 204 mit seinem Flanschteil 202 über, das heißt die Schnapphaken 205 und 206 lassen sich im Gegensatz zu den Schnapphaken 5 und 6 aus den vorstehend genannten Figuren 5a - d nicht zusammendrücken. Dies geht aus der in den Figuren 19a - c dargestellten Gestaltung des Mutterteils 204 hervor, die sich weitgehend an die Figuren 7a - c der Patentanmeldung 196 39 396.5 anlehnen, so daß auf die zu diesen Figuren gehörende Beschreibung in der genannten Patentanmeldung Bezug genommen werden kann. Im Unterschied zu der Gestaltung gemäß den Figuren 7a - 7c, in denen die Schlitze 17 und 18 in ihrem Bereich eine Abtrennung der Schnapphaken 5 und 6 vom Mutterteil 4 bewirken, fehlen derartige Schlitze bei der Gestaltung gemäß den Figuren 19a - c, wie insbesondere die Figur 19c zeigt, so daß sich aus der Zusammenfassung von Mutterteil 204 und den daran hängenden Schnapphaken 205 und 206 ein kompaktes Bauteil ergibt, das in sich starr ausgebildet ist.

Bei der Gestaltung der Kunststoffmutter 201 wird die Elastizität der beiden Bänder 213 und 214 (Stützanordnung zur Verbindung von Mutterteil 204 mit dem Flanschteil 202) ausgenutzt, nämlich in dem Sinne, daß die elastischen Bänder 213 und 214 eine drehfedernde Verbindung zwischen Mutterteil 204 und Flanschteil 202 und damit zu den Schnapphaken 205 und 206 herstellen.

Um diese drehfedernde Halterung zwischen Flanschteil 202 und den Schnapphaken 205 und 206 ausnutzen zu können, sind bei der Kunststoffmutter gemäß den Figuren 18a - c am Flanschteil 202 im Bereich der das Flanschteil 202 durchsetzenden Schnapphaken 205 und 206 sich zirkular erstreckende Aussparungen 240 vorgesehen, die in die Fenster 224 übergehen (die entsprechenden Fenster 24 sind insbesondere aus Figur 5c und 6b der Patentanmeldung Nr. 196 39 396.5 ersichtlich). Durch die zirkulare Erweiterung der Fenster 224 in den Bereich der Aussparungen 240 ergibt sich die Möglichkeit, unter Ausnutzung der Elastizität der Bänder 213 und 214 das Mutterteil 204 mit seinen starr aus ihm herausragenden Schnapphaken 205 und 206 gegenüber dem Flanschteil 202 zu verdrehen, und zwar aus der in Figur 17c mit durchgehenden Linien dargestellten Lage in die gestrichelt gezeichnete Lage. Es handelt sich dabei um eine Verdrehung um ca. 45°.

Die Aussparungen 240 sind außerdem in Figur 18a-c zu sehen, die das Flanschteil 202 mit dem Flansch 203 zeigen. Die Darstellung in den Figuren 18a - c folgt derjenigen in Figuren 6a - c aus der Patentanmeldung Nr. 196 39 396, auf die mit der zugehörigen Beschreibung Bezug genommen wird.

Um die Kunststoffmutter gemäß Figur 17a - d in das plattenartige Bauteil 369 gemäß Figur 20 einsetzen zu können, weist dieses das viereckige Durchgangsloch 370 mit den Aussparungen 371, 372 auf. Aufgrund der viereckigen Gestaltung des Durchgangslochs 370 und der beiden am Flanschteil 202 angebrachten Balken 273 und 274 ergibt sich eine Verdrehsicherung.

Bei der so in das Bauteil 369 eingesetzten Kunststoffmutter 201 wird nun das Mutterteil 204 so verdreht, daß die beiden Schnapphaken 205 und 206 in den Bereich der Aussparungen 371, 372 gelangen, so daß die Kunststoffmutter 201 zusammen mit Schnapphaken 205 und 206 vollständig durch das Bauteil 369 hindurchgedrückt werden kann, bis die Schnapphaken 205 und 206 auf die Rückseite des Bauteils 369 gelangen (siehe Darstellung in Figur 8 der Patentanmeldung Nr. 196 39 396.5) und somit aufgrund der Drehfederung der Bänder 213, 214 in ihre Normallage gemäß Figur 17c zurückgedreht werden. In dieser Normallage sitzen die Schnapphaken 205 und 206 hinter dem Bauteil 369, das damit einerseits von dem Flansch 203 und andererseits von den Schnapphaken 205,206 gehalten wird.

In die Figur 20 ist in schematischer Darstellung eine in das Bauteil 369 eingesetzte Kunststoffmutter 201 gezeigt, die sich in der eingerasteten Lage befindet, in der sich die Schnapphaken 205 und 206 hinter das Bauteil 369 setzen.

Es sei noch darauf hingewiesen, daß anstelle des in Figur 20 viereckig dargestellten Durchgangsloch 370 auch ein rundes Loch verwendet werden kann, das dann allerdings mit einer Aussparung versehen sein muß, in die eine entsprechende Verdrehsicherung an der Kunststoffmutter paßt.

## Patentansprüche

1. Kunststoffmutter (1,30,47,50,77,82,86) zum Einsetzen in ein Durchgangsloch (26) eines plattenartigen Bauteils (25,69,92), die aus Halteteilen besteht, von denen eines als an das Bauteil (25,69,92) von der Montageseite andrückbarer Flansch (3,84,91) und ein anderes als von der gegenüberliegenden Seite andrückbare Schnapphaken (5,6;34,35) zum Einrasten hinter das Bauteil (25,69,92) ausgebildet sind, wobei die Halteteile mit einem eine Aufnahmebohrung (11,12;41,42;61,62) für eine Schraube (27) aufweisenden Mutterteil (4,36,52,88) versehen sind, der Flansch (3,84,91) Bestandteil eines das Mutterteil (4,36,52,88) umfassenden Flanschteils (2,31,51,83,87) ist und das Mutterteil (4,36,52,88) in Richtung Flansch (3,84,91) drückbar ist, **dadurch gekennzeichnet,** daß das Mutterteil (4,36,52,88) gegenüber dem Flanschteil axial beweglich durch eine eine Federzone bildende elastische Stützanordnung (13,14;39,40;48,49;53,54;89,90) in Richtung Flanschteil (2,31,51,83,87) gedrückt wird, wobei die Federzone unter Ausgleich unterschiedlicher Dicken des Bauteils (25,69,92) das Mutterteil (4,36,52,88) und das Flanschteil (2,31,51,83,87) nach Einsetzen der Kunststoffmutter (1,30,47,50,77,82,86) in Anlage an das Bauteil (25,69,92) bringt.

2. Kunststoffmutter nach Anspruch 1, **dadurch gekennzeichnet,** daß das Flanschteil (2,31,51,83,87) das Mutterteil (4,36,52,88) verdrehungssicher führt.

3. Kunststoffmutter nach Anspruch 1 oder 2, **dadurch gekennzeichnet,** daß der Flansch (3) als Platte ausgebildet und das Mutterteil (4) mit den Schnapphaken (5,6) versehen ist (Fig.5a-d).

4. Kunststoffmutter nach Ansprüche 1 oder 2, **dadurch gekennzeichnet**, daß der Flansch in Segmente (32,33) aufgeteilt ist, die jeweils mit einem Schnapphaken (34,35) versehen sind (Fig. 1a-d).

5. Kunststoffmutter nach Anspruch 4, **dadurch gekennzeichnet,** daß auch das Mutterteil (4) mit Schnapphaken (5,6) versehen ist (Fig.9).

6. Kunststoffmutter nach einem der Ansprüche 1 bis 5, **dadurch gekennzeichnet,** daß das Flanschteil (2,31,51,83,87) das Mutterteil (4,36,52,88) hülsenartig umgibt.

7. Kunststoffmutter nach einem der Ansprüche 1 bis 6, **dadurch gekennzeichnet**, daß das Flanschteil (2) und das Mutterteil (4) mit Anschlägen (20,21;22,23) für die Begrenzung der Axialbeweglichkeit versehen sind (Fig.5).

8. Kunststoffmutter nach einem der Ansprüche 1 bis 7, **dadurch gekennzeichnet,** daß Mutterteil (4) und Flanschteil (2) über die elastische Stützanordnung (13,14,48,49,89,90) bildende Kunststoffbänder einstückig miteinander verbunden sind.

9. Kunststoffmutter nach einem der Ansprüche 1 bis 7, **dadurch gekennzeichnet,** daß der Zusammenhalt zwischen Mutterteil (52) und Flanschteil (51) aus einer Verrasterung (55,56;78,79;80,81) besteht, die bei einem Einschieben des Mutterteils (52) in das Flanschteil (51) wirksam wird (Fig. 13).

10. Kunststoffmutter nach Anspruch 9, **dadurch gekennzeichnet,** daß die Verrasterung (55,56,57,58,59,60) die elastische Stützanordnung (53,54) enthält (Fig.10a, b; Fig. 13).

11. Kunststoffmutter nach einem der Ansprüche 1 bis 10, **dadurch gekennzeichnet,** daß der Flansch auf seiner dem Mutterteil zugewandten Seite mit einer in das Durchgangsloch passenden Verdrehsicherung (65,66;73,74) versehen ist (Fig. 10a,b; Fig.12).

12. Kunststoffmutter nach einem der Ansprüche 1 bis 11, **dadurch gekennzeichnet,** daß der Flansch (84) mit einer Dichtzone (85) versehen ist (Fig. 14).

13. Kunststoffmutter nach einem der Ansprüche 1 bis 12, **dadurch gekennzeichnet,** daß die Aufnahmebohrung des Mutterteils (4) auf der dem Flansch (3) zugewandten Seite einen Durchgangsbereich (11) bildet und einen daran anschließenden engeren Bereich (12) aufweist (Figur 5a - d).

14. Kunststoffmutter nach Anspruch 13, **dadurch gekennzeichnet,** daß der engere Bereich (12,42) einen das Eindrehen einer selbstfurchenden Schraube ermöglichenden Durchmesser besitzt.

15. Kunststoffmutter nach Anspruch 13, **dadurch gekennzeichnet,** daß der engere Bereich (97) ein Gewinde (98) aufweist (Fig.15).

16. Kunststoffmutter nach Anspruch 14 oder 15, **dadurch gekennzeichnet,** daß die Aufnahmebohrung an ihrem Übergang zu ihrem engeren Bereich (62) über eine gewindeartige Schräge (63) eine oder mehrere Stufen (64) bildet (Fig.10a).

17. Kunststoffmutter nach einem der Ansprüche 1 bis 16, **dadurch gekennzeichnet,** daß der Flansch (91) auf seiner dem Bauteil (92) zugewandten Seite mit Rastnasen (93,94) versehen ist, die hinter die dem Flansch (91) abgewandten Seite des Bauteils (92) einrastbar sind (Fig.15).

18. Kunststoffmutter nach einem der Ansprüche 1 bis 17, **dadurch gekennzeichnet,** daß das Flanschteil (2,31,51,83,87) das Mutterteil (4,36,52,88) mit einem eine radiale gegenseitige Verschiebung ermöglichenden Spiel führt.

19. Kunststoffmutter nach einem der Ansprüche 1 bis 18, **dadurch gekennzeichnet,** daß die Schnapphaken (105/106) derart federnd mit dem Mutterteil (104) verbunden sind, daß sie das Durchgangsloch (26) beim Einsetzen im wesentlichen frei passieren und zum Einrasten durch Eindrehen einer Schraube (27) auswärts drückbar sind.

20. Kunststoffmutter nach einem der Ansprüche 1 bis 18, **dadurch gekennzeichnet,** daß die Schnapphaken (205, 206) starr in das Mutterteil (204) übergehen und das Mutterteil (204) mit dem Flanschteil (202) über eine elastische Stützanordnung (213, 214) verbunden ist, die das Mutterteil (204) sowohl in Richtung Flanschteil (202) drückt als auch das Mutterteil (204) zusammen mit den Schnapphaken (205, 206) drehfedernd gegenüber dem Flanschteil (202) hält.

## Claims

1. Plastic nut (1, 30, 47, 50, 77, 82, 86) for inserting into a through-hole (26) in a panel-like component (26, 69, 92), the nut comprising retaining parts, of which one is designed as a flange (3, 84, 91) which can be pressed onto the component (25, 69, 92) from the fitting side and another is designed as snap-action hooks (5, 6; 34, 35) which can be pressed on from the opposite side and are intended for latching in behind the component (25, 69, 92), the retaining parts being provided with a nut part (4, 36, 52, 88) which has a receiving bore (11, 12; 41, 42; 61, 62) for a screw (27), the flange (3, 84, 91) being a constituent part of a flange part (2, 31, 51, 83, 87) which encloses the nut part (4, 36, 52, 88), and it being possible for the nut part (4, 36, 52, 88) to be pressed in the direction of the flange (3, 84, 91), characterized in that the nut part (4, 36, 52, 88), which can be moved axially with respect to the flange part, is pressed in the direction of the flange part (2, 31, 51, 83, 87) by an elastic supporting arrangement (13, 14; 39, 40; 48, 49; 53, 54; 89, 90) which forms a spring zone, it being the case that, once the plastic nut (1, 30, 47, 50, 77, 82, 86) has been inserted, the spring zone brings the nut part (4, 36, 52, 88) and the flange part (2, 31, 51, 83, 87) into abutment against the component (25, 69, 92), differing thicknesses of the component (25, 69, 92) being compensated in the process.

2. Plastic nut according to Claim 1, characterized in that the flange part (2, 31, 51, 83, 87) guides the nut part (4, 36, 52, 88) such that it cannot turn.

3. Plastic nut according to Claim 1 or 2, characterized in that the flange (3) is designed as a plate and the nut part (4) is provided with the snap-action hooks (5, 6) (Figures 5a - d).

4. Plastic nut according to Claim 1 or 2, characterized in that the flange is divided up into segments (32, 33) which are each provided with a snap-action hook (34, 35) (Figures 1a - d).

5. Plastic nut according to Claim 4, characterized in that the nut part (4) is also provided with snap-action hooks (5, 6) (Figure 9).

6. Plastic nut according to one of Claims 1 to 5, characterized in that the flange part (2, 31, 51, 83, 87) surrounds the nut part (4, 36, 52, 88) in a sleeve-like manner.

7. Plastic nut according to one of Claims 1 to 6, characterized in that the flange part (2) and the nut part (4) are provided with stops (20, 21; 22, 23) for limiting the capacity for axial movement (Figure 5).

8. Plastic nut according to one of Claims 1 to 7, characterized in that the nut part (4) and flange part (2) are connected to one another integrally via plastic strips, which form the elastic supporting arrangement (13, 14, 48, 49, 89, 90).

9. Plastic nut according to one of Claims 1 to 7, characterized in that the nut part (52) and flange part (51) are held together by a latching means (55, 56; 78, 79; 80, 81), which takes effect when the nut part (52) is pushed into the flange part (51) (Figure 13).

10. Plastic nut according to Claim 9, characterized in that the latching means (55, 56, 57, 58, 59, 60) contains the elastic supporting arrangement (53, 54) (Figures 10a, b; Figure 13).

11. Plastic nut according to one of Claims 1 to 10, characterized in that the flange is provided, on its side which is directed towards the nut part, with a turning-prevention means (65, 66; 73, 74) which fits into the through-hole (Figures 10a, b; Figure 12).

12. Plastic nut according to one of Claims 1 to 11, characterized in that the flange (84) is provided with a sealing zone (85) (Figure 14).

13. Plastic nut according to one of Claims 1 to 12, characterized in that the receiving bore in the nut part (4) forms a through-passage region (11) on the side which is directed towards the flange (3) and has a narrower region (12) adjoining said through-passage region (Figures 5a - d).

14. Plastic nut according to Claim 13, characterized in that the narrower region (12, 42) has a diameter which makes it possible for a self-tapping screw to be screwed in.

15. Plastic nut according to Claim 13, characterized in that the narrower region (97) has a thread (98) (Figure 15).

16. Plastic nut according to Claim 14 or 15, characterized in that the receiving bore forms, at its transition to its narrower region (62), one or more steps (64) via a thread-like slope (63) (Figure 10a).

17. Plastic nut according to one of Claims 1 to 16, characterized in that, on its side which is directed towards the component (92), the flange (91) is provided with latching noses (93, 94) which can be latched in behind that side of the component (92) which is directed away from the flange (91) (Figure 15).

18. Plastic nut according to one of Claims 1 to 17, characterized in that the flange part (2, 31, 51, 83, 87) guides the nut part (4, 36, 52, 88) with a degree of play which permits mutual displacement in the radial direction.

19. Plastic nut according to one of Claims 1 to 18, characterized in that the snap-action hooks (105/106) are connected resiliently to the nut part (104) such that, upon insertion, they pass through the through-hole (26) essentially freely and, for the purpose of latching in, can be pressed outwards by the action of a screw (27) being screwed in.

20. Plastic nut according to one of Claims 1 to 18, characterized in that the snap-action hooks (205, 206) pass rigidly into the nut part (204), and the nut part (204) is connected to the flange part (202) via an elastic supporting arrangement (213, 214), which presses the nut part (204) in the direction of the flange part (202) and also retains the nut part (204), together with the snap-action hooks (205, 206), in a rotationally resilient manner with respect to the flange part (202).

## Revendications

1. Ecrou en matière plastique (1,30,47,50,77,82, 86) destiné à être inséré dans un trou traversant (26) d'un composant en forme de plaque (25,69,92), et qui est formé de parties de retenue, dont l'une est agencée sous la forme d'une bride (3,84,91) pouvant être serrée contre le composant (25,69,92) sur le côté du montage et dont l'autre est agencée sous la forme d'un crochet encliquetable (5,6;34,35), pouvant être repoussé sur le côté opposé et destiné à s'encliqueter derrière le composant (25,69,82), et dans lequel les parties de retenue sont équipées d'une partie formant écrou (4,36,52,88), qui comporte un perçage de réception (11,12;41,42;61,62) pour une vis (27), la bride (3,84,91) fait partie d'une partie de bride (2,31,51,83,87) qui entoure la partie formant écrou (4,36,52,88), et la partie formant écrou (4,36,52,88) peut être repoussée en direction de la bride (3,84,91), caractérisé en ce que la partie formant écrou (4,36,52,88) est repoussée, en étant déplaçable axialement par rapport à la partie de bride, en direction de la partie de bride (2,31,51,83,87) au moyen d'un dispositif de support élastique (13,14;39,40; 48,49;53,54;89,90) qui constitue une zone formant ressort, la zone formant ressort ayant pour effet d'amener la partie formant écrou (4,36,52,88) et la partie de bride (2,31,51,83,87) à s'appliquer contre le composant (25,69,92) après insertion de l'écrou en matière plastique (1,30,47,50,77,82,86) moyennant la compensation d'épaisseurs variables du composant (25,69,92).

2. Ecrou en matière plastique selon la revendication 1, caractérisé en ce que la partie de bride (2,31,51,83,87) guide avec blocage en rotation la partie formant écrou (4,36,52,88).

3. Ecrou en matière plastique selon la revendication 1 ou 2, caractérisé en ce que la bride (2) est agencée en forme de plaque et la partie formant écrou (4) est pourvue de crochets encliquetables (5,6) (figures 5a-d).

4. Ecrou en matière plastique selon la revendication 1 ou 2, caractérisé en ce que la bride est subdivisée en segments (32,33), qui sont pourvus respectivement d'un crochet encliquetable (34,35) (figures 1a-d).

5. Ecrou en matière plastique selon la revendication 4, caractérisé en ce que la partie formant écrou (4) est pourvue de crochets encliquetables (5,6) (figure 9).

6. Ecrou en matière plastique selon l'une de revendications 1 à 5, caractérisé en ce que la partie de bride (2,31,5,83,87) entoure à la manière d'une douille la partie formant écrou (4,36,52,88).

7. Ecrou en matière plastique selon l'une des revendications 1 à 6, caractérisé en ce que la partie de bride (2) et la partie formant écrou (4) sont pourvues de butées (20,21;22,23) servant à limiter la mobilité axiale (figure 5).

8. Ecrou en matière plastique selon l'une des revendications 1 à 7, caractérisé en ce que la partie formant écrou (4) et la partie de bride (1) sont reliées entre elles d'un seul tenant au moyen de bandes de matière plastique constituant le dispositif de support élastique (13,14,48,49,89,90).

9. Ecrou en matière plastique selon l'une des revendications 1 à 7, caractérisé en ce que le système d'assemblage entre la partie formant écrou (52) et la partie de bride (51) est formé par un dispositif d'encliquetage (55,56;78,79;80,81), qui devient actif lors de l'insertion de la partie formant écrou (52) dans la partie de bride (51) (figure 13).

10. Ecrou en matière plastique selon la revendication 9, caractérisé en ce que le dispositif d'encliquetage (55,56,57,58,59,60) contient le dispositif de support élastique (53,54) (figures 10a,b;figure 13).

11. Ecrou en matière plastique selon l'une des revendications 1 à 10, caractérisé en ce que la bride comporte, sur son côté tourné vers la partie formant écrou, un système de blocage en rotation (65,66;73,74), qui est monté dans le trou traversant (figure 10a,b;figure 12).

12. Ecrou en matière plastique selon l'une des revendications 1 à 11, caractérisé en ce que la bride (84) est pourvue d'une zone d'étanchéité (85) (figure 14).

13. Ecrou en matière plastique selon l'une des revendications 1 à 12, caractérisé en ce que le perçage de réception de la partie formant écrou (4) forme, sur le côté tourné vers la bride (3), une zone de traversée (11) et comporte une zone plus étroite (12) adjacente à la zone précédente (figures 5a-d).

14. Ecrou en matière plastique selon la revendication 13, caractérisé en ce que la partie plus étroite (12,42) possède un diamètre qui permet le vissage d'une vis autotaraudeuse.

15. Ecrou en matière plastique selon la revendication 13, caractérisé en ce que la partie plus étroite (97) possède un filetage (98) (figure 15).

16. Ecrou en matière plastique selon la revendication 14 ou 15, caractérisé en ce que le perçage de réception forme, au niveau de sa jonction avec sa partie plus étroite (62), et ce au moyen de la présence d'un biseau analogue à un filetage (63), un ou plusieurs épaulements (64) (figure 10a).

17. Ecrou en matière plastique selon l'une des revendications 1 à 16, caractérisé en ce que la bride (91) comporte, sur son côté tourné vers le composant (92), des becs d'encliquetage (93,94), qui peuvent s'encliqueter derrière le côté du composant (92), tourné à l'opposé de la bride (91) (figure 15).

18. Ecrou en matière plastique selon l'une des revendications 1 à 17, caractérisé en ce que la partie de bride (2,31,51,83,85) guide la partie formant écrou (4,36,52,88) avec un jeu qui permet un décalage radial réciproque.

19. Ecrou en matière plastique selon l'une des revendications 1 à 18, caractérisé en ce que les crochets encliquetables (105/106) sont reliés élastiquement à la partie formant écrou (104) de telle sorte qu'ils traversent essentiellement librement le trou traversant (26) lors de leur insertion et peuvent être repoussés vers l'extérieur, pour leur encliquetage, moyennant la rotation d'une vis (27).

20. Ecrou en matière plastique selon l'une des revendications 1 à 18, caractérisé en ce que les crochets encliquetables (205,206) se prolongent, selon une liaison rigide, par la partie formant écrou (204) et que la partie formant écrou (204) est reliée à la partie de bride (202) par l'intermédiaire d'un dispositif de protection élastique (213,214) qui repousse la partie formant écrou (204) en direction de la partie de bride (220) et insère également la partie formant écrou (204) conjointement avec le crochet encliquetable (205,206) avec une élasticité de rotation par rapport à la partie de bride (202).
